# EUROPEAN PATENT APPLICATION

(11) **EP 3 609 208 A1**
(43) Date of publication of application: **12.02.2020**
(21) Application number: 18000654.6
(22) Date of filing: 06.08.2018
(51) Int. Cl.: H04W 8/18, H04W 8/20, H04W 8/30, H04W 8/24

(54) **SECURE ELEMENT ALLOWING DOWNLOAD TO AND DELETION OF PROFILES**

(71) Applicant: Giesecke+Devrient Mobile Security GmbH, 81677 München (DE)
(72) Inventor: Larsson, Thomas, 125 56 Älvsjö (SE); Wimböck, Ulrich, 82327 Tutzing (DE)

(57) **Abstract**

A Secure Element of a mobile device, comprising at least one subscription profile in a memory and an operating system running on a processor unit, the operating system supporting commands DELETE, UNDELETE and REMOVE executable on profiles stored in memory; the command DELETE executed on a profile effecting the profile to have a DELETED state, wherein a DELETED profile is unselectable or unusable, however remains stored in memory; the command UNDELETE executed on a DELETED profile effecting cancellation of the DELETED state of the profile; the command REMOVE executed on a profile effecting removal of the profile from memory.

## Description

### Field of the invention

The present invention relates to a Secure Element of a mobile device, comprising at least one subscription profile by which the mobile device is configured for mobile network connectivity in a mobile network, the Secure Element comprising an operating system running on a processor unit and a profile memory storing said at least one subscription profile, and allowing download to and deletion of profiles from said memory.

### Background of the invention

Operation of a mobile device (that is a device connectable to a mobile network), such as a Smartphone, Wearable or other device, in a mobile network of a mobile network operator MNO requires the mobile device to have a Secure Element containing a subscription profile, or brief profile, for the network. The profile effects configuration of the mobile device in the network. The profile consists of a data set enabling establishment, operation and termination of connections of the mobile device in the mobile network. The profile comprises at least an International Mobile Subscriber Identity IMSI and an authentication key Ki. A physical mobile device without its Secure Element SE is sometimes related to as Mobile Station MS for differentiation.

Secure Elements of different form factors are known. A Secure Element of plug-in form factor is known as SIM card (2G system) or Universal Integrated Circuit Card UICC (3G, 4G system). Embedded Secure Elements known as eSIM (2G) or eUICC (3G, 4G) have a similar functionality to a UICC, however are fixedly built into the mobile device. Mobile devices have a chipset comprising several single chips. Future models envisage to incorporating a Secure Element comprising a subscription profile into the chipset of the mobile device.

Multi profile Secure Elements allow several profiles to be present on the Secure Element at the same time. Generally only one profile is in an active or enabled state, and further profiles are in a disabled state. Switching of profiles between active (enabled) and disabled state is done by commands sent to the Secure Element from a terminal or Subscription Management Server.

Subscription Management is the management of profiles on a Secure Element, including downloading new profiles, deleting profiles, updating profiles, and further management tasks on yet to be downloaded or already present profiles. In a known Subscription Management infrastructure, profiles are provided by a data preparation server SM-DP and routed to the Secure Element by a Secure Router SM-SR.

Flexible Secure Elements allow Subscription Management when the Secure Element, or the mobile device including the Secure Element, is already in the field, under control of an end user.

Subscription Management in the field, initiated by an end user, has chances but also risks. If an end user deletes a profile by mistake, the profile including its IMSI is lost. Back-up of profiles outside the Secure Element is an inacceptable security breach, since it would enable cloning of profiles. The end user has to download a new profile. The mobile network operation MNO, on the other hand has to spend a new IMSI for the new profile and provide further resources in the MNO background system. The available number space for IMSIs is large but not unlimited. Therefore spending of IMSIs due to erroneous profile deletions by end users should be avoided.

According to some embodiments, removal of a profile is notified to a background system, via a network connection, as soon as said network connection is available. In embodiments where REMOVE is executable only during network connectivity is present, the notification of profile removal to the background system is preferably done immediately. According to some embodiments, no notification to the background system is made, when a profile is or has been marked DELETED only, without removal of the profile from memory. This measure allows a user to manage profiles without final and binding effect towards the mobile network operator.

### Objective of the invention

It is an object of the present invention to provide a Secure Element in which the adverse consequences of erroneous profile deletion by an end user are mitigated or avoided.

### Summary of the invention

The object of the invention is achieved by a Secure Element with the following features, according to claim 1. Embodiments of the invention are presented in dependent claims.

An inventive Secure Element is characterized by the operating system supporting commands DELETE, UNDELETE and REMOVE executable on profiles stored in memory of the Secure Element. The command DELETE executed on a profile effects the profile to have a DELETED state, wherein a DELETED profile is unselectable or unusable, however remains stored in memory. The command UNDELETE executed on a DELETED profile effects cancellation of the DELETED state of the profile, so as to establish the state of the profile the profile had before the DELETE command was executed on it. The command REMOVE executed on a profile effects removal of the profile from memory. Hence, if a user DELETES a profile by mistake, he can revoke the deletion by an UNDELETE. Only a REMOVE can finally remove profiles. By this, protection against erroneous profile deletion and its adverse consequences is achieved.

According to preferred embodiments, a REMOVE command can be executed only when the Secure Element has network connectivity to a background system, e.g. a server of the network operator or/and to a Subscription Management Secure Router SM-SR.

According to preferred embodiments, a REMOVE command can be executed only on DELETED profiles, but not on profiles in a normal enabled (activated) or disabled state. This optional measure provides additional protection against erroneous profile deletion.

In some embodiments, special commands like FACTORY RESET or remote direct REMOVE (D-REMOVE) are provided, by which the rule "REMOVE possible only on DELETED profiles" can be overruled. The thus achieved immediate profile deletion can be desired particularly before a mobile device including its Secure Element is handed over from an original end user to a new end user, so as to assure data privacy to the original end user.

According to embodiments of the invention, the Secure Element, particularly operation system, comprises a profile removal scheduler constructed to remove DELETED profiles by one or several REMOVE commands according to a removal schedule.

Particularly, the profile removal scheduler can be constructed to survey and manage the memory requirements of an additional profile upon download of said additional profile to the memory of the Secure Element. More specifically, the profile removal scheduler receives information that a required memory space of the additional profile in the memory is larger than an available memory space in the memory. Consequently, the profile removal scheduler initiates the removal of DELETED profiles by one or several REMOVE commands according to said predefined removal schedule.

The removal schedule can imply consideration of one or several of the following rules. Removal of profiles in an order considering an order in which profiles have been marked DELETED, e.g. profiles first marked deleted are deleted are first (FIFO), or last marked deleted are removed first (LIFO). Removal of profiles according to a user input at the Secure Element or at the device and forwarded to the Secure Element.

According to some embodiments, removal schedule implies the removal of all profiles having a DELETED state, as soon as the Secure Element receives one or several REMOVE command(s) from a background system vie a mobile network connection. Optionally, the background system polls the Secure Element in predefined, e.g. regular, time intervals and initiates removal of all DELETED profiles. Besides, the background system can always remove only particular profiles by a REMOVE command parametrized with the profiles to be removed.

Optionally, the commands DELETE, UNDELETE, REMOVE can be parametrized by identifiers of profiles on which the respective command shall be executed.

### Brief description of the drawings

Embodiments of the invention will now be described with reference to the accompanying drawings, throughout which like parts are referred to by like references, and in which represent:
- Fig. 1: A diagram showing effects of DELETE, UNDELETE and REMOVE commands, according to embodiments of the invention;
- Fig. 2: A diagram showing effects of DELETE, FACTORY RESET and direct REMOVE commands, according to embodiments of the invention;
- Fig. 3: A diagram showing effects of DELETE, and REMOVE with parametrization commands, according to embodiments of the invention;
- Fig. 4: A schematic Subscription Management setup, suited for the invention.

### Detailed description of the invention

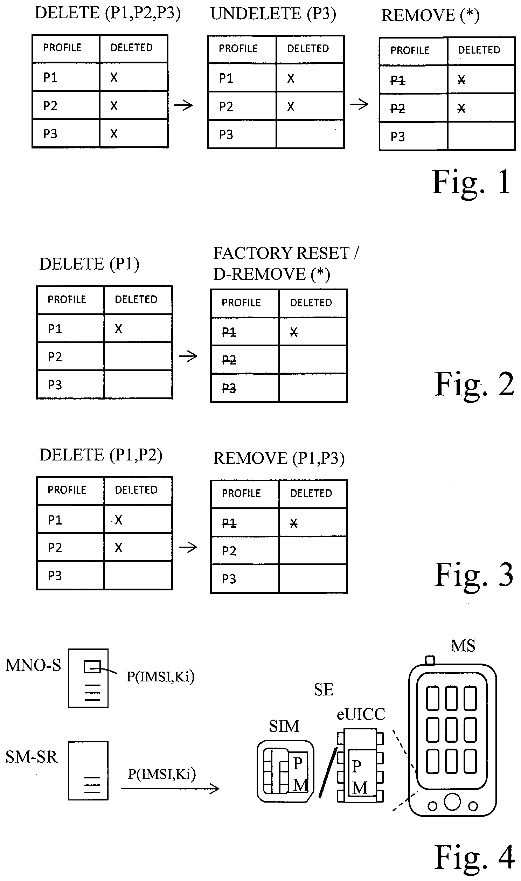

Fig. 4 shows a schematic Subscription Management setup, suited for the invention. A mobile device comprises a Mobile Station MS and a Secure Element SE, embodied either as plug-in SIM or as embedded eUICC. Profiles P, including at least an IMSI and an authentication key Ki, can be downloaded to the Secure Element from a Subscription Management Secure Router SM-SR. A server MNO-S in the background system of a mobile network operation MNO maintains a register of profiles present on the Secure Element SE.

Figs 1-3 show effects of commands on a Secure Element SE in an infrastructure like the one of Fig. 4, according to embodiments of the invention. The Secure Element SE comprises three subscription profiles P1, P2, P3, stored in a memory M of the Secure Element SE.

According to Fig. 1 a DELETE command parametrized by profiles P1, P2, P3 sets all three profiles P1, P2, P3 to a DELETED state. An UNDELETE command executed on the Secure Element SE consequent to the DELETE command, parametrized with P3, cancels the DELETED state of the third profile P3 only, and re-establishes the state of profile P3 which the profile P3 had before the DELETE command. The two further profiles P1, P2 remain unchanged by the parametrized UNDELETE, since the parametrization relates only to P3. A non-parametrized REMOVE command executed on the Secure Element SE is constructed to remove all DELETED profiles from memory M. Thus, in Fig. 1, only the marked DELETED commands P1 and P2 are removed from memory M. P3 remains stored in memory M.

According to preferred embodiments, REMOVE can be executed on the Secure Element SE, so as to remove profiles P from memory M, only when the Secure Element SE has connectivity to a background system, particularly to a server MNO-S of the network operator or/and to a Subscription Management Secure Router SM-SR.

According to Fig. 2, a DELETE command, parametrized by P1 marks only the first profile P1 as DELETED. A FACTORY RESET command, executed locally by an end user, either with or without connectivity to the background system, immediately removes all profiles P1, P2, P3 from memory M, irrespective of if their state is DELETED or not. Similarly, a direct D-REMVOVE command sent remotely from a background system, e.g. from a Subscription Management Secure Router SM-SR, to the Secure Element SE, immediately removes all profiles P1, P2, P3 from memory M, irrespective of if their state is DELETED or not.

According to Fig. 3, a DELETE command, parametrized by P1, P2 marks first profiles P1 and P2 as DELETED. A (normal) REMOVE command executed on the Secure Element SE, parametrized by P1 (DELETED) and P3 (not DELETED) removes only profile P1, but not profiles P2 and P3. Profile P2 is not indicated for removal by the parametrization and is therefore not removed. P3 is indicated for removal by the parametrization, is however not in a DELETED state, hence remains in memory M, according to preferred embodiments of the invention.

## Claims

1. A Secure Element (SE) of a mobile device, comprising at least one subscription profile (P) by which the mobile device is configured for mobile network connectivity in a mobile network, the Secure Element (SE) comprising an operating system running on a processor unit and a profile memory (M) storing said at least one subscription profile (P), and allowing download to and deletion of profiles from said memory;
**characterized by**:
- the operating system supporting commands DELETE, UNDELETE and REMOVE executable on profiles (P) stored in memory (M);
-- the command DELETE executed on a profile effecting the profile (P) to have a DELETED state, wherein a DELETED profile (P) is unselectable or unusable, however remains stored in memory (M);
-- the command UNDELETE executed on a DELETED profile (P) effecting cancellation of the DELETED state of the profile (P);
-- the command REMOVE executed on a profile (P) effecting removal of the profile from memory (M).

2. The Secure Element (SE) of claim 1, further comprising a profile removal scheduler constructed to remove DELETED profiles (P) by one or several REMOVE commands according to a removal schedule.

3. The Secure Element (SE) of claim 2, wherein the profile removal scheduler is constructed to, upon download of an additional profile (P) to the memory (M) of the Secure Element (SE):
- receive information that a required memory space of the additional profile (P) in the memory (M) is larger than an available memory space in the memory (M); and
- remove DELETED profiles (P) by one or several REMOVE commands according to said predefined removal schedule.

4. The Secure Element (SE) of claim 2 or 3, wherein the removal schedule implies consideration of one or several of the following rules:
- removal of profiles (P) in an order considering an order in which profiles (P) have been marked DELETED;
- removal of profiles (P) according to a user input at the Secure Element or at the device and forwarded to the Secure Element;
- removal of all profiles (P) having a DELETED status upon receipt of a REMOVE command from a background system.

5. The Secure Element of any of claims 1 to 4, wherein the REMOVE command is constructed to execute:
- on any profile having any state under the condition that the Secure Element has connectivity to a background system via a network connection;
- only on DELETED profiles under the condition that the Secure Element has no connectivity to a background system;
particularly effecting that direct removal of a profile, which doesn't have a DELETED state, is enabled only under the condition that the Secure Element has connectivity to a background system via a network connection.

6. The Secure Element of any of claims 1 to 5, the operating system further supporting a FACTORY RESET command, said FACTORY RESET effecting removal of all profiles from memory, therein particularly, if required, overruling rules of a REMOVE command, particularly enabling direct removal of a profile, which doesn't have a DELETED state, also when the Secure Element has no connectivity to a background system via a network connection.

7. The Secure Element of any of claims 1 to 6, the operating system further allowing the execution of the commands DELETE, UNDELETE and/or REMOVE to be triggered by a background system via a network connection.

8. The Secure Element of any of claims 1 to 7, the operating system further constructed to:
- notify removal of a profile to a background system, via a network connection, as soon as said network connection is available;
- make no notification to the background system, if a profile has been marked DELETED only, without removal of the profile from memory (M).

9. The Secure Element of any of claims 1 to 8, wherein the DELETED state implies that a profile having a DELETED state:
- is not an active profile; and
- cannot be activated and/or cannot be enabled so as to become an active profile directly from the DELETED state.

## Amended claims

### Amended claims in accordance with Rule 137(2) EPC.

1. A Secure Element (SE) of a mobile device, comprising at least one subscription profile (P) by which the mobile device is configured for mobile network connectivity in a mobile network, the Secure Element (SE) comprising an operating system running on a processor unit and a profile memory (M) storing said at least one subscription profile (P), and allowing download to and deletion of profiles from said memory;
- the operating system supporting commands DELETE, UNDELETE and REMOVE executable on profiles (P) stored in memory (M);
-- the command DELETE executed on a profile effecting the profile (P) to have a DELETED state;
-- the command UNDELETE executed on a DELETED profile (P) effecting cancellation of the DELETED state of the profile (P);
-- the command REMOVE executed on a profile (P) effecting removal of the profile from memory (M);
**characterized in that** a DELETED profile (P) is unselectable and unusable, however remains stored in memory (M).

2. The Secure Element (SE) of claim 1, further comprising a profile removal scheduler constructed to remove DELETED profiles (P) by one or several REMOVE commands according to a removal schedule.

3. The Secure Element (SE) of claim 2, wherein the profile removal scheduler is constructed to, upon download of an additional profile (P) to the memory (M) of the Secure Element (SE):
- receive information that a required memory space of the additional profile (P) in the memory (M) is larger than an available memory space in the memory (M); and
- remove DELETED profiles (P) by one or several REMOVE commands according to said predefined removal schedule.

4. The Secure Element (SE) of claim 2 or 3, wherein the removal schedule implies consideration of one or several of the following rules:
- removal of profiles (P) in an order considering an order in which profiles (P) have been marked DELETED;
- removal of profiles (P) according to a user input at the Secure Element or at the device and forwarded to the Secure Element;
- removal of all profiles (P) having a DELETED status upon receipt of a REMOVE command from a background system.

5. The Secure Element of any of claims 1 to 4, wherein the REMOVE command is constructed to execute:
- on any profile having any state under the condition that the Secure Element has connectivity to a background system via a network connection;
- only on DELETED profiles under the condition that the Secure Element has no connectivity to a background system;
particularly effecting that direct removal of a profile, which doesn't have a DELETED state, is enabled only under the condition that the Secure Element has connectivity to a background system via a network connection.

6. The Secure Element of any of claims 1 to 5, the operating system further supporting a FACTORY RESET command, said FACTORY RESET effecting removal of all profiles from memory, therein particularly, if required, overruling rules of a REMOVE command, particularly enabling direct removal of a profile, which doesn't have a DELETED state, also when the Secure Element has no connectivity to a background system via a network connection.

7. The Secure Element of any of claims 1 to 6, the operating system further allowing the execution of the commands DELETE, UNDELETE and/or REMOVE to be triggered by a background system via a network connection.

8. The Secure Element of any of claims 1 to 7, the operating system further constructed to:
- notify removal of a profile to a background system, via a network connection, as soon as said network connection is available;
- make no notification to the background system, if a profile has been marked DELETED only, without removal of the profile from memory (M).

9. The Secure Element of any of claims 1 to 8, wherein the DELETED state implies that a profile having a DELETED state:
- is not an active profile; and
- cannot be activated and/or cannot be enabled so as to become an active profile directly from the DELETED state.
